# EUROPÄISCHE PATENTANMELDUNG

(11) **EP 1 903 489 A1**
(43) Veröffentlichungstag der Anmeldung: **26.03.2008**
(21) Anmeldenummer: 06020057.3
(22) Anmeldetag: 25.09.2006
(51) Int. Cl.: G06Q 30/00

(54) **Zahlungssystem und Verfahren zum elektronischen Bezahlen**

(71) Anmelder: MintNet GmbH, 24937 Flensburg (DE)
(72) Erfinder: von Wildenradt, Dirk, 24991 Freienwill (DE)
(74) Vertreter: Glawe, Delfs, Moll

(57) **Zusammenfassung**

Die Erfindung betrifft ein Zahlungssystem für elektronische Zahlungen über ein öffentliches Weitverkehrsdatennetz (5) mit einer Kundenstation (1), einer Verkäuferstation (2), und einer Zentralstation (3), die eine Kundendatenbank (31), eine Kontodatenbank (43) mit Konten von Kunden und Verkäufern umfasst, wobei die Stationen (1, 2, 3) jeweils mit dem Datennetz (5) verbunden sind. Erfindungsgemäß ist vorgesehen, dass die Zentralstation (3) eine Wertmarkendatenbank (32), eine Wertmarkenerzeugungseinheit (33), die dazu ausgebildet ist, Wertmarken (7) mit dazu eindeutigen Zertifizierungscodes (72) zu erzeugen, in der Wertmarkendatenbank (32) abzuspeichern und den Zertifizierungscode (72) an die Kundenstation (1) auszugeben, und eine Prüfeinheit (35) aufweist, die die zu einem Zertifizierungscode (72) gehörende Wertmarke (7) aus der Wertmarkendatenbank (32) abruft und an die Verkäuferstation (2) übermittelt, wobei weiter die Kundenstation (1) eine Eingabeeinheit (11) für ein Wertdatum und eine Verarbeitungseinheit (12), die ein Anfragesignal mit dem Wertdatum (73) erzeugt und an die Zentralstation (3) ausgibt, und eine Ausgabeeinheit (13) aufweist, die den Zertifizierungscode (72) empfängt und als Zertifizierungstelegramm zur Übermittlung über einen beliebigen Kanal ausgibt, wobei ferner die Verkäuferstation (2) eine Empfangseinheit (21) zum Empfangen des Zertifizierungstelegramms und Extrahieren des Zertifizierungscodes (72), eine Prüfeinheit (22), die ein Abfragesignal mit dem Zertifizierungscode erzeugt und an die Zentralstation ausgibt, und eine Freigabeeinheit (23) aufweist, die bei Empfang der Wertmarke (7) ein Zahlungserfolgssignal (24) ausgibt. Die Erfindung schafft damit eine virtuelle Wertmarke, mittels der die Kundenstation (1) bei der Verkäuferstation (2) bezahlen kann. Dabei wird die Wertmarke nicht unmittelbar zwischen den beiden verschickt, sondern aus Sicherheitsgründen lediglich ein von der Zentralstation (3) generierter Zertifizierungscode. Damit stellt die Erfindung ein sicheres und einfach zu handhabendes System zur Bewirkung von Zahlungen über ungeschützte Verbindungen zur Verfügung. Die Erfindung erstreckt sich weiter auf ein entsprechendes Verfahren.

## Beschreibung

Die Erfindung betrifft ein Zahlungssystem für elektronische Zahlungen über ein öffentliches Weitverkehrsdatennetz mit einer Kundenstation, einer Verkäuferstation und einer Zentralstation, die jeweils mit dem Datennetz verbunden sind.

Mit dem Anstieg des elektronischen Handels entstand auch ein Bedarf an einem Mittel, mittels dem Geldmittel bargeldlos und von einem Teilnehmer zu einem anderen bestimmten Teilnehmer fließen, sondern auch eine sofortige Bestätigung der Zahlung und Gutschrift des Zahlungsbetrags beim Zahlungsempfänger.

Es sind verschiedene elektronische Zahlungssysteme (e-Payment) bekannt geworden, bei denen ein Geldbetrag von einem durch das System geführten Konto zu einem anderen solchen Konto überwiesen wird. Den Systemen fehlt es an einer Möglichkeit der Zertifizierung des Zahlungsvorgangs. Weiter sind Zahlungssysteme bekannt, bei denen eine Zertifizierung der jeweils durchgeführten Zahlungsvorgänge durchgeführt werden kann. Jedoch setzen diese Systeme in der Regel spezialisierte Hardware voraus, die zusätzlichen Aufwand verursacht und obendrein eine Schwachstelle für Manipulationen ist.

Der Erfindung liegt die Aufgabe zu Grunde, ein Zahlungssystem sowie ein Zahlungsverfahren der eingangs genannten Art zu schaffen, bei dem sowohl Zahlungssicherheit sowie auch Zahlungsgarantie ohne zusätzliche Hardware erreicht werden kann.

Die erfindungsgemäße Lösung liegt in den Merkmalen der unabhängigen Ansprüche. Vorteilhafte Weiterbildungen sind Gegenstand der abhängigen Ansprüche.

Bei einem Zahlungssystem für elektronische Zahlungen über ein öffentliches Weitverkehrsdatennetz mit einer Kundenstation, einer Verkäuferstation und einer Zentralstation, die jeweils mit dem Datennetz verbunden sind, ist gemäß der Erfindung vorgesehen, dass die Zentralstation eine Wertmarkendatenbank und eine Wertmarkenerzeugungseinheit, die dazu ausgebildet ist, Wertmarken und dazu eindeutige Zertifizierungscodes zu erzeugen, in der Wertmarkendatenbank abzuspeichern und den Zertifizierungscode an die Kundenstation auszugeben, und eine Prüfeinheit aufweist, die die zu einem Zertifizierungscode gehörende Wertmarke aus der Wertmarkendatenbank abruft und an die Verkäuferstation übermittelt, weiter dass die Kundenstation eine Eingabeeinheit für ein Wertdatum und eine Verarbeitungseinheit, die ein Anfragesignal mit dem Wertdatum erzeugt und an die Zentralstation ausgibt, und eine Ausgabeeinheit aufweist, die den Zertifizierungscode empfängt und als Zertifizierungstelegramm zur Übermittlung über einen beliebigen Kanal ausgibt, und dass die Verkäuferstation eine Empfangseinheit zum Empfangen des Zertifizierungstelegramms und Extrahieren des Zertifizierungscodes, eine Prüfeinheit, die ein Abfragesignal mit den Zertifizierungscode erzeugt und an die Zentralstation ausgibt, und eine Freigabeeinheit aufweist, die bei Empfang der Wertmarke ein Zahlungserfolgssignal ausgibt.

Die Erfindung schafft eine virtuelle Wertmarke, welche sich zur Übertragung über ungeschützte öffentliche Kommunikationsnetzwerke und -kanäle eignet. Sie ermöglicht damit einen Bezahlvorgang zwischen zwei Teilnehmern, dem Kunden und dem Verkäufer, die im Übrigen in keiner Beziehung zueinander stehen und zwischen denen insbesondere kein geschützter Kommunikationskanal besteht. Es ist sogar ermöglicht, dass der Bezahlvorgang aus Sicht des Kunden anonym erfolgen kann, das heißt der Verkäufer erhält keine weiteren Informationen über die Identität des Kunden; sämtliche kritischen Daten werden lediglich zentral an einer Stelle vorgehalten, nämlich der Zentralstation. Bei ihr wird auf Anfrage des Kunden eine Wertmarke geschaffen, und zu ihr ein Zertifizierungscode erstellt. Die Wertmarke wird zusammen mit dem Zertifizierungscode in einer internen Datenbank der Zentralstation gespeichert. Nur der Zertifizierungscode wird an den Kunden übermittelt. Zum Bezahlen übermittelt der Kunde nur den Zertifizierungscode, nicht die Wertmarke an sich, an den Verkäufer. Dies kann auf an sich beliebigem Weg geschehen. Die Übertragungsstrecke braucht nicht manipulationssicher zu sein. Kommt es zu Veränderungen am Zertifizierungscode, so wird dies bei der späteren Verifikation ermittelt werden, und der Zahlungsvorgang wird ungültig. Die Verifikation erfolgt in der Weise, dass der Verkäufer den erhaltenen Zertifizierungscode mit einer Anfrage zu dessen Gültigkeit an die Zentralstation übermittelt. Die Zentralstation ermittelt anhand des Zertifizierungscodes den zughörigen Eintrag in der Wertmarkendatenbank, prüft ob der Zertifizierungscode mit dem zu der aufgefundenen Wertmarke gespeicherten Zertifizierungscode übereinstimmt, und gibt im Positivfall eine Bestätigung an den Verkäufer aus. Mit dem Erhalt der Bestätigung hat der Käufer die Gewähr, dass der Betrag, über den die Wertmarke ausgestellt ist, zu seinen Gunsten eingelöst werden wird. Er erhält damit sozusagen die virtuelle Wertmarke. Deren Gültigkeit ist von der Zentralstation geprüft und gesichert. Der Verkäufer genießt so dank der Erfindung die Vorzüge einer zertifizierten Liquidität des Kunden und einer Zahlungsgarantie.

### Nachfolgend seien einige verwendete Begriff erläutert:

Unter Kundenstation wird eine Zahlstation verstanden, welche als Debitor bei einem Zahlungsvorgang auftritt. Der Zahlungsvorgang kann sich auf Geld in einer beliebigen offiziellen oder inoffiziellen Währung erstrecken. Der Zahlungsvorgang kann sich auch auf Nicht-Währungen beziehen, beispielsweise Punkte oder Meilen in Bonus- oder Kundenbindungssystemen.

Unter Verkäuferstation wird eine Station verstanden, die als Kreditor bei einem Zahlungsvorgang fungiert. Der Zahlungsvorgang kann im Rahmen einer an sich beliebigen Transaktion erfolgen, wie insbesondere Einzelhandel, Zimmerbuchungen für Hotels, Verkauf von Tickets, Fahrkarten oder Flugscheinen, oder auch Dienstleistungen wie Verleih von Fahrzeugen.

Unter eine Wertmarkendatenbank wird ein Speicher verstanden, der in Bereiche für Datensätze von Wertdaten unterteilt ist. Die Wertdaten umfassen insbesondere ein Wertdatum sowie einen eindeutigen Zertifizierungscode. Weiter können die Wertmarken Angaben zum Kunden, für den die Wertmarke erstellt wurde, oder zum vorgesehenen Verkäufer, dem die Wertmarke übermittelt werden soll, aufweisen.

Unter einem Zertifizierungscode wird eine Kennnummer verstanden, welche eine eindeutige Indexierung der Wertmarken bildet.

Zweckmäßigerweise sind die Wertmarken so gestaltet, dass ihr Wertdatum ein Datum für einen Zahlungsempfänger umfasst. Damit werden die Wertmarken personalisiert. Eine damit erstellte, personalisierte Wertmarke kann nur von dem angegebenen Zahlungsempfänger eingelöst werden. Dies verbessert den Schutz vor unbefugter Verwendung der Wertmarke. Sollte eine Wertmarke von einer unberechtigten Person eingelöst werden, so würde ihr der Wert nicht gutgeschrieben werden können, da die Identität nicht mit derjenigen des in der Wertmarke gespeicherten Zahlungsempfängers übereinstimmt. Damit ergibt sich ein höherer Schutz gegenüber Manipulationen.

An sich kann das Zertifizierungstelegramm, mit dem der Zertifizierungscode von der Kundenstation an die Verkäuferstation übermittelt wird, auf beliebigem Weg übermittelt werden. Besonders zweckmäßig ist eine Übertragung über ein Funksignal. Dies ermöglicht es, mobile Geräte für die Kunden- und Verkäuferstationen einzusetzen. Insbesondere bei mobilen Kundenstationen erschließen sich vielfältige Anwendungsmöglichkeiten, wie beispielsweise das Bezahlen von Fahrkarten. Es kann insbesondere vorgesehen sein, ein Mobilfunknetz zur Übertragung der Funksignale zu verwenden. Zweckmäßigerweise arbeitet dieses nach dem GSM- oder UMTS-Standard. Dies ermöglicht es, als Ausgabeeinheit der Kundenstation ein kostengünstiges Mobilfunkgerät zu verwenden. Dabei kann die Tastatur des Mobilfunkgeräts als Eingabeeinheit, und der Hauptprozessor des Mobilfunkgeräts als Verarbeitungseinheit fungieren, zweckmäßigerweise verbunden mit einer JAVA-Engine. Durch die Ausgestaltung der Kundenstation als herkömmliches Mobiltelefon wird einerseits sowohl eine hohe Marktdurchdringung wie auch eine gute Akzeptanz bei den Kunden erreicht. Die Inbetriebnahme des erfindungsgemäßen Zahlungssystems ist damit ausgesprochen kostengünstig, da herkömmliche Mobiltelefone verwendet werden können, und nur - in zahlenmäßig viel geringerem Umfang - Verkäuferstationen beziehungsweise mindestens eine Zentralstation bereitzustellen sind.

Als besonders zweckmäßig hat es sich erwiesen, wenn das Zertifizierungstelegramm eine Textnachricht, insbesondere eine SMS ist. Damit lässt sich auf besonders effiziente Weise eine Kommunikation zwischen Kundenstation und Verkäuferstation bewerkstelligen. Es soll aber nicht ausgeschlossen werden, dass anstelle von SMS andere Nachrichtentypen werden, beispielsweise MMS. Letztere bieten den Vorteil, dass sie Binärdaten übertragen können. Damit kann gewünschtenfalls eine Verschlüsselung des Zertifizierungstelegramms vorgenommen werden. Besonders bewährt hat sich hier eine Verschlüsselung mittels eines binären Systems mit einem öffentlichen Chiffrierungs- und einem nicht öffentlichen Dechiffrierschlüssel. Vorzugsweise weist die Zentralstation eine Verschlüsselungs-/Entschlüsselungseinheit auf.

In vielen Fällen wird es genügen, eine Zentralstation vorzusehen. Es soll aber nicht ausgeschlossen werden, dass mehrere Zentralstationen bereitgestellt werden. Dies bietet nicht nur den Vorteil, dass damit eine größere Benutzerzahl versorgt werden kann, sondern außerdem können die Zentralstationen räumlich verteilt angeordnet sein. Damit werden Signalwege zwischen den Teilnehmern und damit auch Antwortzeiten verringert. Insbesondere kann auch eine regionale Aufteilung vorgenommen werden. Weiter ist es ermöglicht, eine Redundanz zwischen verschiedenen Zentralstationen zu schaffen. Durch eine Mehrzahl von Zentralstationen kann das erfindungsgemäße Zahlsystem leicht an die Zahl der Nutzer angepasst werden.

Um ein der ausgestellten Wertmarke und ihrem Wertdatum entsprechenden Betrag von dem in der Kontodatenbank geführten Konto des jeweiligen Kunden abzubuchen und entsprechend auf das Konto des Verkäufers aufzubuchen, ist zweckmäßigerweise eine Abrechnungseinrichtung vorgesehen. Sie kann innerhalb der Zentralstation oder extern zu dieser angeordnet sein. Im Fall einer externen Anordnung ist zweckmäßigerweise auch die Kontodatenbank extern bei der Abrechnungseinrichtung vorgesehen. Die externe Anordnung bietet den Vorteil einer Trennung zwischen der Zentralstation, welche zur Betriebsfähigkeit des erfindungsgemäßen Zentralsystems an ein öffentliches Weitverkehrsdatennetz angeschlossen sein muss, und der Abrechnungseinrichtung, welche die besonders zu schützenden Finanzdaten enthält. Vorzugsweise weist die Abrechnungseinrichtung ein Kontoführungsmodul auf. Es ist dazu ausgebildet, das Konto des Kunden um das Wertdatum zu vermindern und das Konto des Verkäufers entsprechend zu erhöhen. Das Kontoführungsmodul kann insbesondere dazu ausgebildet sein, bei auf Guthabenbasis geführten Konten eine Wertmarke nur dann für einen Kunden zu erzeugen, wenn dessen Konto ein ausreichend positives Guthaben aufweist. Mit einer solchen guthabenbasierten Kontodatenbank wird erreicht, dass den Wertmarken eine garantierte Liquidität des jeweiligen Kunden gegenübersteht, indem die Wertmarken vorbezahlt sind. Damit eignet sich das erfindungsgemäße Zahlungssystem auch zur Anwendung ein einer solchen Umgebung, bei der Liquiditäts- und Bonitätsfragen sonst nicht oder nur schwer geklärt werden können und ein entsprechendes elektronisches Zahlungssystem daher bisher nicht realisiert werden konnte.

Vorzugsweise weist die Kundenstation eine Identifikationseinheit für eine Mehrzahl von Kunden auf, und die Verarbeitungseinheit ist dazu ausgebildet, dem Wertdatum ein Kundenidentifikationssignal anzufügen. Dies ermöglicht es, dass mehrere verschiedene Kunden ein und dieselbe Kundenstation verwenden können. Der jeweilige Kunde identifiziert sich zu Beginn einer Transaktion gegenüber der Kundenstation mittels der Identifikationseinheit. Diese übermittelt die entsprechenden Identifikationsdaten an die Zentralstation, so dass die von jedem Kunden vorgenommenen Transaktionen von der Zentralstation jeweils dem richtigen Konto in der Kontodatenbank zugeordnet werden. Damit eignet sich das erfindungsgemäße Zahlsystem auch zur Anwendung an öffentlichen Terminals, die von einer Vielzahl verschiedener Benutzer genutzt werden.

Die Erfindung erstreckt sich weiter auf ein entsprechendes Verfahren. Zum elektronischen Bezahlen zwischen einem Kunden und einem Verkäufer mit einem Eingeben eines Wertdatums zur Bezahlung an einer Kundenstation, Übermitteln eines Anfragesignals enthaltend das Wertdatum an eine Zentralstation, Erzeugen eines zu dem Anfragesignal eindeutigen Zertifizierungscodes, Speichern des Wertdatums und Zertifizierungscodes in einer Wertmarkendatenbank, ist gemäß der Erfindung vorgesehen, dass der Zertifizierungscode an die Kundenstation ausgegeben wird, ein Zertifizierungstelegramm mit dem Zertifizierungscode von der Kundenstation zu einer Verkäuferstation übermittelt wird, der Zertifizierungscode extrahiert und von dem Verkäufer zu der Zentralstation übermittelt wird, der Zertifizierungscode anhand der Wertmarkendatenbank geprüft wird, und schließlich eine Freigabe von der Zentralstation an den Verkäufer bei positivem Ergebnis übermittelt wird.

Zur Beschreibung des Verfahrens wird zur Vermeidung von Wiederholungen auf vorstehende Erläuterungen zu dem erfindungsgemäßen Zahlungssystem verwiesen.

Die Erfindung wird nachfolgend unter Bezugnahme auf die Zeichnung erläutert, in der ein vorteilhaftes Ausführungsbeispiel dargestellt ist. Es zeigen:
- Fig. 1: eine schematische Ansicht eines Ausführungsbeispiels des erfindungsgemäßen Zahlsystems;
- Fig. 2: eine Darstellung eines Datensatzes in der Wertmarkendatenbank; und
- Fig. 3: ein Ablaufdiagramm, das den Betrieb des Zahlungssystems gemäß dem Ausführungsbeispiel zeigt.

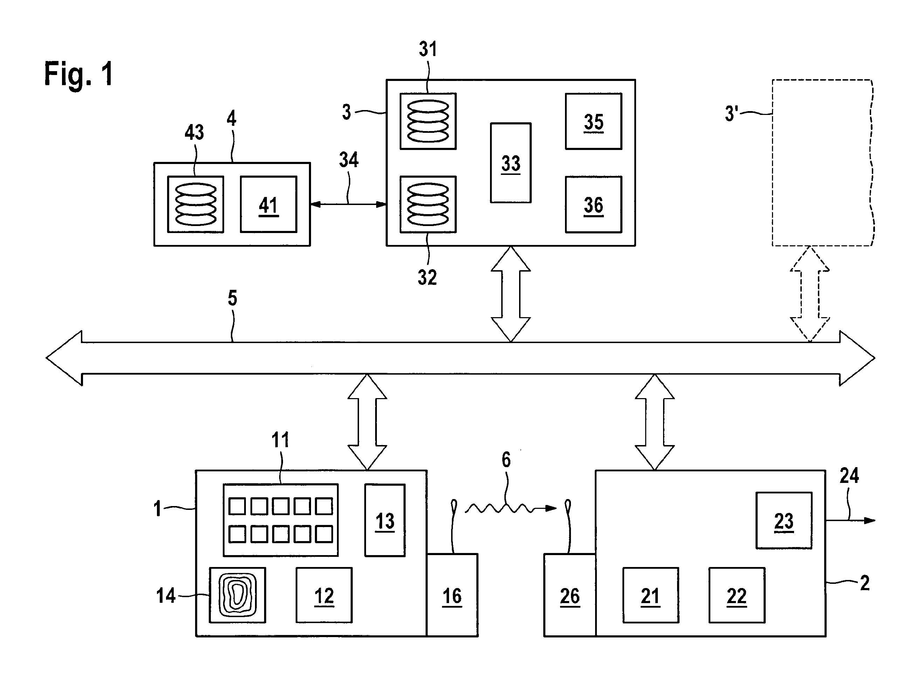

Ein Ausführungsbeispiel für ein erfindungsgemäßes Zahlungssystem ist schematisiert in Fig. 1 dargestellt. An ein öffentliches Weitverkehrsdatennetz in Gestalt des Internets 5 sind eine Kundenstation 1, eine Verkäuferstation 2 sowie eine Zentralstation 3 angeschlossen. An das Weitverkehrsdatennetz 5 können nach Belieben weitere Kunden- und Verkäuferstationen (nicht dargestellt) angeschlossen sein. Insbesondere bei einer hohen Anzahl von Kunden- und Verkäuferstationen 1, 2 sowie großer räumlicher Ausdehnung kann es zweckmäßig sein, zusätzliche Zentralstationen 3' vorzusehen.

Die Zentralstation 3 ist verbunden mit einer Abrechnungseinheit 4. Sie ist in dem dargestellten Schema als gesonderte Einheit ausgeführt, die mit der Zentralstation über eine Datenverbindung 34 verbunden ist. Diese Ausführung kann zweckmäßig sein, um die besonders sicherheitsempfindliche Abrechnungseinrichtung 4 besonders zu schützen, nämlich durch eine besonders überwachte Datenverbindung 34 anstelle einer unmittelbaren Anbindung an das öffentliche Weitverkehrsnetz 5. Es soll aber nicht ausgeschlossen sein, dass die Abrechnungseinrichtung 4 in die Zentralstation 3 integriert ist.

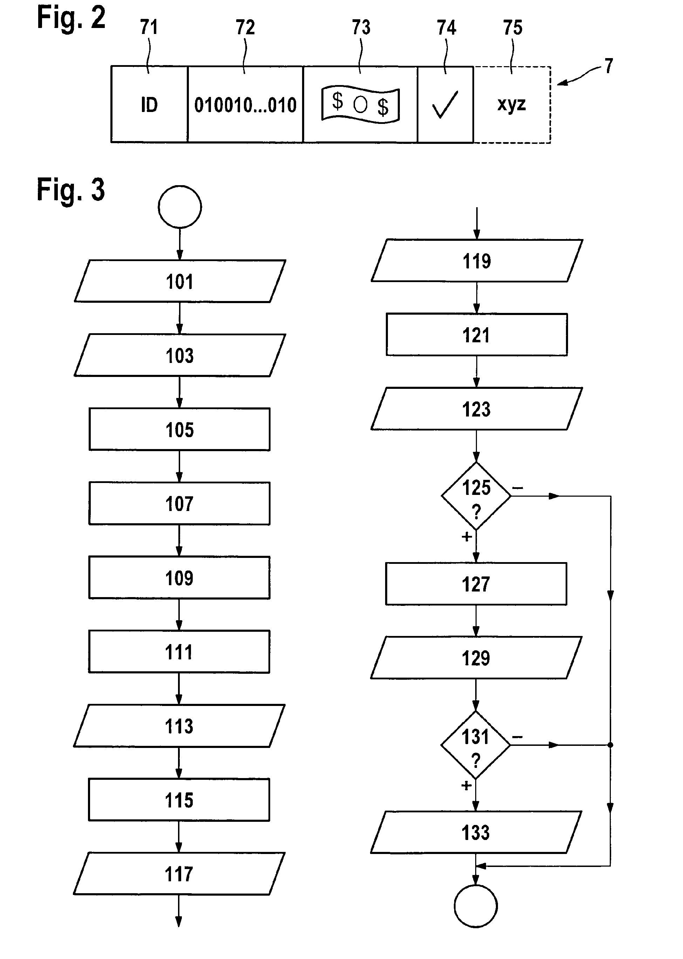

Die Zentralstation 3 umfasst als Hauptkomponenten eine Kundendatenbank 31, eine Wertmarkendatenbank 32, eine Wertmarkenerzeugungseinheit 33 sowie eine Prüfeinheit 35. Ferner sind nicht dargestellte Ein-/Ausgabeeinheiten zum Anschluss an das öffentliche Weitverkehrsdatennetz 5 vorgesehen. Die Abrechnungseinheit 4 umfasst eine Kontodatenbank 43 sowie ein Kontoführungsmodul 41. Die Kontodatenbank 43 weist zwei Klassen von Konten auf, eine erste Klasse mit Kundenkonten und eine zweite Klasse mit Verkäuferkonten. Das Kontoführungsmodul 41 ist dazu ausgebildet, den Betrag eines Wertdatums von dem Konto eines Kunden abzuziehen und das Konto eines Verkäufers entsprechend zu erhöhen. Die Wertmarkendatenbank 32 ist in mehrere Speicherbereiche aufgeteilt. Die Speicherbereiche enthalten jeweils ein Datum für den Betrag einer Wertmarke (Wertmarkendatum) sowie einen Zertifizierungscode, und ferner eine eindeutige laufende Nummer und ein Verwendungsfeld. Ein Beispiel für ein solches Wertdatum ist in Fig. 2 dargestellt. Bei dem mit ID bezeichneten Feld 71 handelt es sich um die laufende Nummer, bei dem mit der Bezugsziffer 72 versehenen Feld um den Zertifizierungscode, bei dem mit der Bezugsziffer 73 versehenen Feld um das Wertmarkendatum, welches den Betrag der Wertmarke (ihren Wert) angibt, und schließlich bei dem mit der Bezugsziffer 74 bezeichneten Feld um einen Indikator dafür, ob die Wertmarke bereits eingelöst wurde oder noch nicht. Die Gesamtheit der Felder 71-74 bildet eine Wertmarke 7, wie sie in die Wertmarkendatenbank 32 in großer Zahl eingespeichert ist. Optional kann in einem weiteren Feld 75 eine Angabe über den vorgesehenen Zahlungsempfänger enthalten sein.

Zur Erzeugung einer solchen Wertmarke ist die Wertmarkenerzeugungseinheit 33 vorgesehen. Sie nimmt als Eingabesignal eine Angabe des Werts der zu erstellenden Wertmarke, also des Wertdatums, auf. Weiter erhält sie Informationen über die Identität des Kunden, für den die Wertmarke erstellt wird. Die Wertmarkenerzeugungseinheit 33 bildet für jede Wertmarke einen eindeutigen Zertifizierungscode 72. Dieser ist vorzugsweise verschlüsselt. Die Wertmarkenerzeugungseinheit übermittelt über die Datenleitung 34 an die Abrechnungseinrichtung 4 ein Signal darüber, für welchen Kunden eine Wertmarke 7 mit welchem Wertmarkendatum 73 erstellt und in die Wertmarkendatenbank 32 eingestellt wurde. Das Abrechnungsmodul 41 der Abrechnungseinrichtung 4 ist dazu ausgebildet, das Wertdatum 73 gleich von dem Konto des Kunden in der Kontodatenbank 43 abzuziehen, um ein Leerlaufen des Kontos bei zeitnaher Ausstellung einer Mehrzahl von Wertmarken 7 zu verhindern. Die Wertmarkenerzeugungseinheit 33 ist weiter dazu ausgebildet, nach Erzeugung der Wertmarke 7 und ihre Einspeicherung in die Wertmarkendatenbank 32 den zugehörigen Zertifizierungscode 72 über das Datennetz 5 an die Kundenstation 1 zu übermitteln.

Die Kundenstation 1 umfasst eine Eingabeeinheit 11, eine Verarbeitungseinheit 12 sowie eine Ausgabeeinheit 13 und ein Identifikationsmodul 14. Weiter ist für sie eine Ausgabeeinheit 16 vorgesehen, die zweckmäßigerweise als ein Mobilfunkgerät ausgeführt ist. Die Eingabeeinheit 11 weist eine Zifferntastatur auf. Sie ist dazu ausgebildet, als Eingabewert ein Wertdatum für eine Wertmarke anzunehmen. Um eine Zuordnung der aus dieser Angabe zu erstellenden Wertmarke 7 zu einem bestimmten Kunden zu ermöglichen, dient das Identifikationsmodul 14. Es ist im dargestellten Ausführungsbeispiel als ein Fingerabdrucksensor ausgebildet. Er dient dazu, dem Zahlungssystem bekannte Kunden anhand ihres Fingerabdrucks zu identifizieren, wodurch weitere manuelle und zeitaufwendige Identifikationsschritte entfallen können. Aus dem von der Eingabeeinheit 11 bestimmten Wertdatum für den Wert einer zu erstellenden Wertmarke 7 sowie dem von dem Identifikationsmodul 14 bereitgestellten Identifikationssignal für den die Wertmarke anfordernden Kunden bildet die Verarbeitungseinheit 12 ein Anfragesignal an die Zentralstation 3. Dieses wird über das öffentliche Weitverkehrsdatennetz 5 an die Zentralstation 3 übermittelt. Anhand dieser Angaben erzeugt die Wertmarkenerzeugungseinheit 33 wie vorstehend beschrieben eine Wertmarke 7. Sie wird in die Wertmarkendatenbank 32 eingespeichert und ihr Zertifizierungscode 72 wird nach Verschlüsselung durch die Verschlüsselungs-/Entschlüsselungseinheit 36 über das Datennetz 5 an die Kundenstation 1 übermittelt. Die Ausgabeeinheit 13 der Kundenstation 1 empfängt den Zertifizierungscode und erzeugt daraus ein Zertifizierungstelegramm, das als ein Signal an ein Mobiltelefon 16 angelegt ist. Dieses übermittelt das Identifikationstelegramm über eine Mobilfunkverbindung 6 an die Verkäuferstation 2.

Es sei darauf hingewiesen, dass der Datenverkehr zwischen der Kundenstation 1 und der Verkäuferstation 2 über einen beliebigen Kommunikationskanal, insbesondere ein Mobilfunknetz 6, geführt werden kann. Insbesondere bei einem mobilen Funknetz bietet es den Vorteil, dass die Kundenstationen 1 nicht stationär zu sein brauchen, sondern dass es sich um portable Geräte, wie mit zusätzlichen Funktionen versehene Mobiltelefone handeln kann.

Die Verkäuferstation 2 umfasst eine Empfangseinheit 21, eine Prüfeinheit 22 sowie eine Freigabeeinheit 23. Das über das Mobilfunknetz 6 übertragene Signal mit dem Zertifizierungstelegramm wird empfangen von einem zweiten Mobiltelefon 26, und an die Empfangseinheit 21 übermittelt. Diese ist dazu ausgebildet, aus dem Zertifizierungstelegramm den Zertifizierungscode zu extrahieren und an die Prüfeinheit 22 als Eingangssignal anzulegen. Die Prüfeinheit 22 ist dazu ausgebildet, den Zertifizierungscode über das Datennetz 5 an die Zentralstation 3 zu übermitteln. Die Prüfeinheit 35 der Zentralstation ist dazu ausgebildet, die zu dem entschlüsselten Zertifizierungscode 72 gehörende Wertmarke 7 aus der Wertmarkendatenbank 32 abzurufen, und das Wertdatum 73 sowie den Verwendungsstatusindikator 74 abzufragen. Zeigt der Wertmarkenstatusindikator 74 die Verwendbarkeit der Wertmarke 7 an, so wird ein Freigabesignal mit dem Wertdatum 73 als Antwortsignal an die Prüfeinheit 22 über das Datennetz 5 übermittelt. Empfängt die Prüfeinheit 22 dieses Signal, so gibt sie ein entsprechendes Freigabesignal an die Freigabeeinheit 23, die ein Signal an einem entsprechenden Freigabesignalanschluss 24 ausgibt. Daran angeschlossen sein kann zum Beispiel ein an sich bekanntes Warenwirtschaftssystem (nicht dargestellt), welches die Versendung einer von dem Kunden 2 bestellten und mit der Wertmarke 7 bezahlten Ware bewirkt. Die Prüfeinheit 35 der Zentralstation 3 kennzeichnet in einem weiteren Schritt die betreffende Wertmarke 7 als "verwendet" in dem Feld 74 für den Verwendungsindikator, und gibt ein Signal an das Abrechnungsmodul 41, um dem Konto des Verkäufers in der Kontodatenbank 43 einen Betrag entsprechend dem Wertdatum 73 der Wertmarke 7 gutzuschreiben. Damit ist der Zahlungsvorgang abgeschlossen.

In dem in Fig. 3 dargestellten Ablaufdiagramm sind die wesentlichen Verfahrensschritte zusammengefasst. In einem ersten Schritt 101 erfolgt eine Identifikation des Kunden. In einem weiteren Schritt wird ein Betrag für eine anzufordernde Wertmarke eingegeben 103. Die Angaben über den Wert (Wertdatum) sowie den Kunden werden über das Weitverkehrsdatennetz an die Zentralstation 3 übermittelt in Schritt 105. In der Zentralstation wird eine Wertmarke erzeugt in Schritt 107, wobei die Wertmarke in der Wertmarkendatenbank 32 abgespeichert wird in Schritt 109 und durch das Abrechnungsmodul das Konto des Kunden in der Kontodatenbank 43 entsprechend um das Wertdatum vermindert wird in Schritt 111. Die Wertmarkenerzeugungseinheit 33 erzeugt ferner zu der Wertmarke 7 einen Zertifizierungscode, der in Schritt 113 von der Zentralstation 3 an die Kundenstation 1 übermittelt wird. Dort wird der Zertifizierungscode in ein Zertifizierungstelegramm umgewandelt in Schritt 115, und über eine zweite Datenverbindung, ein Mobilfunksystem, übermittelt in Schritt 117. Empfängt die Verkäuferstation 2 das Zertifizierungstelegramm in Schritt 119, so wird aus diesem der Zertifizierungscode extrahiert in Schritt 121 und zur Prüfung an die Zentralstation 3 übermittelt in Schritt 123. Die Prüfeinheit 35 der Zentralstation 3 prüft den eingehenden Zertifizierungscode in Schritt 125 und ermittelt die dazugehörende Wertmarke 7 und ihr Wertdatum 73 in Schritt 127. Letzteres übergibt sie mit einem Freigabesignal in Schritt 129 an die Verkäuferstation 2. Erhält die Verkäuferstation 2 in Schritt 129 das Freigabesignal in Schritt 131, so wird in einem weiteren Schritt 133 das Zahlungserfolgssignal 24 ausgegeben.

## Patentansprüche

1. Zahlungssystem für elektronische Zahlungen über ein öffentliches Weitverkehrsdatennetz (5) mit einer Kundenstation (1), einer Verkäuferstation (2), und einer Zentralstation (3), die eine Kundendatenbank (31), eine Kontodatenbank (43) mit Konten von Kunden und Verkäufern umfasst, wobei die Stationen (1, 2, 3) jeweils mit dem Datennetz (5) verbunden sind,
**dadurch gekennzeichnet, dass**
die Zentralstation (3) eine Wertmarkendatenbank (32), eine Wertmarkenerzeugungseinheit (33), die dazu ausgebildet ist, Wertmarken (7) mit dazu eindeutigen Zertifizierungscodes (72) zu erzeugen, in der Wertmarkendatenbank (32) abzuspeichern und den Zertifizierungscode (72) an die Kundenstation (1) auszugeben, und eine Prüfeinheit (35) aufweist, die die zu einem Zertifizierungscode (72) gehörende Wertmarke (7) aus der Wertmarkendatenbank (32) abruft und an die Verkäuferstation (2) übermittelt, wobei die Kundenstation (1) eine Eingabeeinheit (11) für ein Wertdatum und eine Verarbeitungseinheit (12), die ein Anfragesignal mit dem Wertdatum (73) erzeugt und an die Zentralstation (3) ausgibt, und eine Ausgabeeinheit (13) aufweist, die den Zertifizierungscode (72) empfängt und als Zertifizierungstelegramm zur Übermittlung über einen beliebigen Kanal ausgibt, wobei ferner die Verkäuferstation (2) eine Empfangseinheit (21) zum Empfangen des Zertifizierungstelegramms und Extrahieren des Zertifizierungscodes (72), eine Prüfeinheit (22), die ein Abfragesignal mit dem Zertifizierungscode (72) erzeugt und an die Zentralstation (3) ausgibt, und eine Freigabeeinheit (23) aufweist, die bei Empfang der Wertmarke (7) ein Zahlungserfolgssignal (24) ausgibt.

2. Zahlungssystem nach Anspruch 1,
**dadurch gekennzeichnet, dass**
die Wertmarke (7) ein Datum für einen Zahlungsempfänger umfasst.

3. Zahlungssystem nach Anspruch 1 oder 2,
**dadurch gekennzeichnet, dass**
ein Funksignalnetz zur Übermittlung des Zertifizierungstelegramms vorgesehen ist.

4. Zahlungssystem nach Anspruch 3,
**dadurch gekennzeichnet, dass**
das Funksignalnetz ein Mobilfunknetz (6) ist, vorzugsweise auf dem GSM- oder UMTS-Standard, und die Ausgabeeinheit (13) zur Kommunikation mittels eines Mobilfunkgeräts (16) ausgebildet ist.

5. Zahlungssystem nach einem der vorangehenden Ansprüche,
**dadurch gekennzeichnet, dass**
das Zertifizierungstelegramm eine Textnachricht, insbesondere eine SMS ist.

6. Zahlungssystem nach einem der vorangehenden Ansprüche,
**dadurch gekennzeichnet, dass**
eine Abrechnungseinrichtung (4) vorgesehen ist, die mit der Zentralstation (3) verbunden ist.

7. Zahlungssystem nach Anspruch 6,
**dadurch gekennzeichnet, dass**
die Abrechnungseinrichtung (4) ein Kontoführungsmodul (41) aufweist, das dazu ausgebildet ist, das Konto des Kunden um das Wertdatum (73) zu vermindern und das Konto des Verkäufers entsprechend zu erhöhen.

8. Zahlungssystem nach Anspruch 6 oder 7,
**dadurch gekennzeichnet, dass**
die Abrechnungseinrichtung (4) in die Zentralstation integriert ist.

9. Zahlungssystem nach einem der vorangehenden Ansprüche,
**dadurch gekennzeichnet, dass**
die Kundenstation (1) eine Identifikationseinheit (14) für eine Mehrzahl von Kunden aufweist und die Verarbeitungseinheit (12) dazu ausgebildet ist, dem Wertdatum ein Kundenidentifikationssignal anzufügen.

10. Verfahren zum elektronischen Bezahlen zwischen einem Kunden und einem Verkäufer, mit den Schritten
Eingeben eines Wertdatums zur Bezahlung an einer Kundenstation (1),
Übermitteln eines Anfragesignals enthaltend das Wertdatum an eine Zentralstation (3),
Erzeugen eines zu dem Anfragesignal eindeutigen Zertifizierungscodes,
Speichern des Wertdatums und des Zertifizierungscode in einer Wertmarkendatenbank (32),
Ausgeben des Zertifizierungscodes an die Kundenstation (1),
Übermitteln eines Zertifizierungstelegramms mit dem Zertifizierungscode von der Kundenstation (1) zu einer Verkäuferstation (2),
Extrahieren des Zertifizierungscodes,
Übermitteln des Zertifizierungscodes von der Verkäuferstation (2) zu der Zentralstation (3),
Prüfen des Zertifizierungscodes anhand der Wertmarkendatenbank, und
Senden einer Freigabe an die Verkäuferstation (2) bei positivem Ergebnis.
